# EUROPÄISCHE PATENTANMELDUNG

(11) **EP 0 978 429 A2**
(43) Veröffentlichungstag der Anmeldung: **09.02.2000**
(21) Anmeldenummer: 99114987.3
(22) Anmeldetag: 31.07.1999
(51) Int. Cl.: B60S 1/46, B60S 1/54

(54) **Reinigungseinrichtung**

(30) Priorität: 07.08.1998 DE 19835733
(71) Anmelder: REITTER & SCHEFENACKER GmbH & Co. KG, D-73730 Esslingen (DE)
(72) Erfinder: Berg, Roland, 73342 Bad Ditzenbach (DE); Steffel, Hans-Clemens, 73262 Reichenbach (DE); Haf, Helmut, 71409 Schwaikheim (DE); Robel, Wolfgang, 70794 Filderstadt-Sielmingen (DE)
(74) Vertreter: Kohl, Karl-Heinz

(57) **Zusammenfassung**

Die Reinigungseinrichtung hat eine Fördervorrichtung (9), mit der über eine Leitung (9) Reinigungsmedium (11) aus einem Behältnis (1) einer Austrittsöffnung zuführbar ist. Um die Reinigungseinrichtung so auszubilden, daß mit ihr vorhandene Verschmutzungen an Kraftfahrzeugteilen auf einfache, kostengünstige Weise einwandfrei beseitigt werden können, ist das Reinigungsmedium (11) ein Flüssigkeit-Druckgas-Gemisch. Hierdurch gelangt das Reinigungsmedium (11) unter hohem Druck auf die zu reinigende Fläche, wodurch die Schmutzteilchen unter Einwirkung des Druckgas-Flüssigkeit-Gemisches zunächst angelöst und dann auf einfache Weise abgelöst werden können. Die Reinigungseinrichtung eignet sich insbesondere für Kraftfahrzeugteile, wie Leuchten, Spiegel, Scheiben und dgl.

## Beschreibung

Die Erfindung betrifft eine Reinigungseinrichtung nach dem Oberbegriff des Anspruches 1.

Es ist bekannt, zur Reinigung verschmutzter Scheinwerfer eine Reinigungseinrichtung vorzusehen, bei der Wasser auf die Scheiben gespritzt wird, das durch Einschalten einer Pumpe über eine Leitung zu einer Austrittsdüse gefördert wird, die vor dem Scheinwerfer liegt. Durch den Flüssigkeitsstrahl werden die Verunreinigungen eingeweicht und durch zusätzlich vor dem Scheinwerfer angeordnete Scheibenwischer entfernt. Auch die Windschutzscheibe und die Heckscheibe eines Kraftfahrzeuges werden durch solche Reinigungseinrichtungen in Verbindung mit Scheibenwischern gereinigt.

Auch sind Einrichtungen bekannt, die die Reinigungsflüssigkeit unter hohem Druck auf die zu reinigende Fläche aufbringen, ohne daß ein anschließendes Wischen erfolgt.

Nachteilig ist bei dieser Reinigungseinrichtung, daß im Fahrzeug ein relativ großer Flüssigkeitsbehälter untergebracht werden muß, der das Gewicht des Fahrzeuges erhöht, und daß vor allem bei stärkerer Verschmutzung nicht in jedem Fall sichergestellt ist, daß die Schmutzteilchen einwandfrei beseitigt werden können.

Der Erfindung liegt die Aufgabe zugrunde, eine Reinigungseinrichtung dieser Art so auszubilden, daß mit ihr vorhandene Verschmutzungen an Kraftfahrzeugteilen auf einfache, kostengünstige Weise einwandfrei beseitigt werden können.

Diese Aufgabe wird bei einer Reinigungseinrichtung der gattungsbildenden Art erfindungsgemäß mit den kennzeichnenden Merkmalen des Anspruches 1 gelöst.

Infolge der erfindungsgemäßen Ausbildung gelangt das Reinigungsmedium unter hohem Druck auf die zu reinigende Fläche, wodurch die Schmutzteilchen unter Einwirkung des Druckgas-Flüssigkeits-Gemisches zunächst angelöst und dann auf einfache Weise abgelöst werden können. Durch die Verwendung des Druckgas-Flüssigkeits-Gemisches wird der Wasserverbrauch der erfindungsgemäßen Reinigungseinrichtung deutlich herabgesetzt, so daß im Fahrzeug weniger Reinigungsflüssigkeit auf Vorrat gehalten werden muß. Dies hat den Vorteil, daß das Gewicht des Fahrzeuges verringert wird und dadurch der Energieverbrauch des Fahrzeuges sinkt. Da sich die Verschmutzung durch das unter hohem Druck aufgebrachte Gemisch relativ leicht lösen läßt und vollständig entfernt werden kann, kann auf einfache Weise der Funktionszustand des zu reinigenden Fahrzeugteiles in kürzester Zeit wieder vollständig hergestellt werden. Dadurch ist eine hohe Sicherheit des Fahrzeuges im Straßenverkehr gewährleistet, da die zu reinigende Fläche wieder ihre volle Funktionsfähigkeit erhält. So können beispielsweise optische Systeme, Leuchten, wie Scheinwerfer, einwandfrei gereinigt werden, so daß das Fahrzeug im Straßenverkehr jederzeit deutlich wahrnehmbar ist. Die erfindungsgemäße Reinigungseinrichtung eignet sich aber auch zum Reinigen von Spiegeln, Scheiben und anderen Fahrzeugteilen. Da bei der erfindungsgemäßen Reinigungseinrichtung weniger Flüssigkeit zur Reinigung erforderlich ist als bei den herkömmlichen Reinigungseinrichtungen, können auch relativ dünne Versorgungsschläuche verwendet werden, was sich ebenfalls kostengünstig auswirkt.

Weitere Merkmale der Erfindung ergeben sich aus den weiteren Ansprüchen, der Beschreibung und den Zeichnungen.

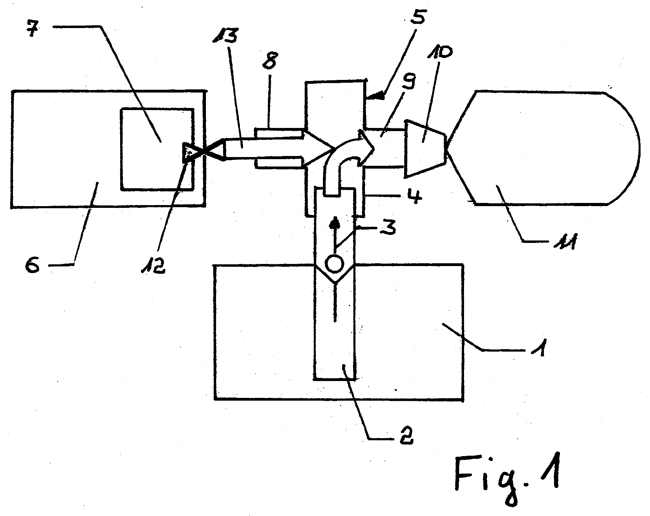

Die Zeichnung zeigt in schematischer Darstellung eine erfindungsgemäße Reinigungseinrichtung. Sie weist einen Flüssigkeitsbehälter 1 auf, in den eine Leitung 2 ragt. In ihr liegt ein Absperrventil 3, vorzugsweise ein Rückschlagventil, das gegen den Flüssigkeitsbehälter 1 schließt. Die Leitung 2 ist außerhalb des Behälters 1 an einen Arm 4 eines Gehäuses 5 angeschlossen. Zum Ausbringen der Flüssigkeit ist eine Fördervorrichtung 6 vorgesehen, die durch einen Kompressor gebildet ist. Er enthält einen Zwischendruckbehälter 7 und ist an einen weiteren Arm 8 des Gehäuses 5 angeschlossen. Es ist über einen Arm oder eine Leitung 9 mit einem Düsenkopf 10 verbunden, über den das Reinigungsmedium 11 ausgetragen wird.

Mit dem Kompressor 6 wird Druckluft erzeugt, die im Zwischenbehälter 7 gespeichert wird. Durch Betätigen des Ventiles 12 werden der Zwischenspeicher 7 und das Ventil 3 geöffnet, so daß Druckluft in Richtung des Pfeiles 13 durch den Arm 8 zum Düsenkopf 10 strömt. Durch die hohe Strömungsgeschwindigkeit der Druckluft entsteht im Gehäuse 5 ein Unterdruck, durch den die Flüssigkeit aus dem Behälter 1 nach dem Venturi-Prinzip angesaugt und mit der Druckluft vermischt wird. Das so gebildete Gas-Wasser-Gemisch 11 tritt aus der Düse 10 aus und trifft unter hohem Druck auf die zu reinigende Oberfläche. Diese kann beispielsweise ein Leuchtenglas, ein Spiegel, eine Scheibe oder ein optisches System oder dergleichen eines Kraftfahrzeuges sein. Zusätzlich können vor dem betreffenden Fahrzeugteil Scheibenwischer oder dergleichen vorgesehen werden. Das Gas-Wasser-Gemisch trifft auf die Schmutzteilchen an der zu reinigenden Oberfläche auf, wodurch diese angelöst und dann abgelöst werden.

Anschließend kann durch Schließen des Absperrventiles 3 die Flüssigkeitszufuhr unterbunden werden, so daß auf die gereinigte Oberfläche nur noch Druckluft auftrifft. Dabei wird die gereinigte Oberfläche getrocknet.

Es ist auch möglich, daß das Gas-Wasser-Gemisch pulsierend auf die zu reinigende Fläche aufgebracht wird. Dadurch läßt sich auch hartnäckig festsitzender Schmutz besser ablösen.

Die Reinigungseinrichtung kann auch so ausgebildet sein, daß der Kompressor 6 mit dem Flüssigkeitsbehälter 1 bzw. dem Schlauch 2 verbunden ist und somit Wasser unter hohem Druck in das Gehäuse 5 gepreßt wird. In diesem Fall wird durch Venturi-Wirkung Luft angesaugt, die sich mit dem komprimierten Wasser zum Gas-Wasser-Gernisch 11 vermischt.

Die Einleitung des Reinigungsvorganges kann sowohl automatisch als auch manuell erfolgen. So können beispielsweise hinter der Lichtscheibe eines Kraftfahrzeug-Scheinwerfers Sensoren vorgesehen sein, die den Verschmutzungsgrad der Lichtscheibe erfassen und bei Überschreiten eines vorgegebenen Verschmutzungsgrades ein Signal erzeugen, das zum Einschalten der Reinigungsvorrichtung verwendet wird. Anstelle dieses automatischen Einschaltvorganges ist es auch möglich, beispielsweise mittels eines Schalters am Armaturenbrett die Reinigungsvorrichtung bei Bedarf einzuschalten.

Nachdem das Fahrzeugteil in der beschriebenen Weise gereinigt ist, kann es seine ursprüngliche Funktion wieder voll erfüllen, zum Beispiel eine Heckleuchte in voller Leuchtstärke leuchten. Dadurch ist die Sicherheit des Kraftfahrzeuges im Straßenverkehr jederzeit gewährleistet, da das Kraftfahrzeug auch bei ungünstigen Witterungsverhältnissen in kürzester Zeit wieder einwandfrei von anderen Verkehrsteilnehmern wahrgenommen werden kann bzw. der Fahrer einwandfreie Sicht hat.

Da die beschriebene Reinigungseinrichtung mit einer relativ geringen Flüssigkeits- bzw. Wassermenge arbeitet, wird auch das Gewicht des Kraftfahrzeuges und damit die Energie zum Betrieb des Fahrzeuges deutlich herabgesetzt. Die Reinigungswirkung der beschriebenen Reinigungseinrichtung kann noch dadurch verbessert werden, wenn die zu reinigende Oberfläche eine Beschichtung aufweist, an der die Reinigungsflüssigkeit leicht abperlt.

## Patentansprüche

1. Reinigungseinrichtung, insbesondere für Kraftfahrzeugteile, wie Leuchten, Spiegel, Scheiben und dergleichen, mit einer Fördervorrichtung, mit der über wenigstens eine Leitung Reinigungsmedium aus mindestens einem Behältnis einer Austrittsöffnung zuführbar ist,
dadurch gekennzeichnet, daß das Reinigungsmedium (11) ein Flüssigkeits-Druckgas-Gemisch ist.

2. Einrichtung nach Anspruch 1,
dadurch gekennzeichnet, daß das Druckgas des Flüssigkeits-Druckgas-Gemisches (11) mit Hilfe eines Kompressors (6, 7) in der Fördervorrichtung (9) erzeugt wird.

3. Einrichtung nach Anspruch 1 oder 2,
dadurch gekennzeichnet, daß die Flüssigkeit des Flüssigkeits-Gas-Gemisches (11), vorzugsweise Wasser, nach dem Venturi-Prinzip mit dem Gas, vorzugsweise Luft, mischbar ist.

4. Einrichtung nach einem der Ansprüche 1 bis 3,
dadurch gekennzeichnet, daß die Flüssigkeitszufuhr vorzugsweise über ein in der Leitung (2) vorgesehenes Absperrventil (3) abschaltbar ist.

5. Einrichtung nach einem der Ansprüche 1 bis 4,
dadurch gekennzeichnet, daß die Fördervorrichtung (6), die Leitung (2) und die vorzugsweise als Teil eines Düsenkopfes ausgebildete Austrittsöffnung (10) an ein Gehäuse (5) angeschlossen sind.

6. Einrichtung nach einem der Ansprüche 1 bis 5,
dadurch gekennzeichnet, daß die Gaszufuhr über ein vorteilhaft am Austritt des Zwischenbehälters (7) angeordnetes Absperrteil (12) steuerbar ist.

7. Einrichtung nach einem der Ansprüche 1 bis 6,
dadurch gekennzeichnet, daß das Gas Druckluft ist, die mit hohem Druck durch das Gehäuse (5) zur Austrittsöffnung (10) strömt und die Flüssigkeit durch Unterdruck ansaugt.

8. Einrichtung nach einem der Ansprüche 1 bis 7,
dadurch gekennzeichnet, daß nach dem Reinigungsvorgang ein Trocknungsvorgang möglich ist über das Absperrventil (3).

9. Einrichtung nach einem der Ansprüche 1 bis 8,
dadurch gekennzeichnet, daß die Reinigungseinrichtung automatisch einschaltbar ist.

10. Einrichtung nach einem der Ansprüche 1 bis 9,
dadurch gekennzeichnet, daß die Reinigungseinrichtung manuell einschaltbar ist.
